# FASCICULE DE BREVET EUROPEEN

(11) **EP 1 222 731 B1**
(45) Date de publication et mention de la délivrance du brevet: **30.11.2011**
(21) Numéro de dépôt: 01947529.2
(22) Date de dépôt: 19.06.2001
(51) Int. Cl.: H02K 49/04, H02K 7/108

(54) **RALENTISSEUR ELECTRIQUE INTERPOSE ENTRE UN MOTEUR ET UNE BOITE DE VITESSES**
ZWISCHEN EINEM VERBRENNUNGSMOTOR UND EINEM GETRIEBE EINGESETZTE RETARDER-BREMSE
ELECTRIC RETARDER INTERPOSED BETWEEN AN ENGINE AND A GEARBOX

(30) Priorité: 21.06.2000 FR 0007918
(43) Date de publication de la demande: 17.07.2002
(73) Titulaire: Telma, 95310 Saint-Ouen L'Aumône (FR)
(72) Inventeur: BOUISSOU, Stefan, F-75014 Paris (FR); DAOÛT, Didier Georges Maurice, F-78570 Andresy (FR)
(74) Mandataire: Bérogin, Francis
(86) Numéro de dépôt international: PCT/FR2001/001913
(87) Numéro de publication internationale: WO 2001/099262

(56) Documents cités:
- FR-A- 2 149 017
- FR-A- 2 591 297
- FR-A- 2 630 868
- FR-A- 2 782 761

## Description

La présente invention concerne un ralentisseur électrique, en particulier pour véhicule.

Parmi ces ralentisseurs, l'invention concerne plus spécialement ceux qui sont destinés à être intercalés entre un arbre moteur entraîné en rotation autour de son axe, et qui est l'arbre de sortie ou le vilebrequin d'un moteur, notamment de véhicule, et un arbre récepteur, destiné à être entraîné autour dudit axe, et qui est l'arbre d'entrée d'une boîte de vitesses, le moteur et la boîte de vitesses comportant chacun un carter, le carter du moteur comportant une paroi arrière s'étendant sensiblement transversalement à l'axe des arbres moteur et récepteur, et le carter de la boîte de vitesse comportant une paroi avant orientée en direction de la paroi arrière du carter du moteur, le ralentisseur étant monté par des moyens de liaison entre les deux carters et comprenant une partie rotorique solidaire en rotation coaxiale de l'arbre moteur, une partie statorique comportant au moins une pièce annulaire fixe traversée coaxialement par l'un des arbres moteur et récepteur ou un prolongement axial de l'un au moins desdits arbres, et solidaire de l'une au moins des parois arrière du carter du moteur et avant du carter de la boîte de vitesses, un induit appartenant à la partie rotorique, et un inducteur appartenant à la partie statorique, l'inducteur étant disposé sur ladite pièce annulaire fixe de la partie statorique, en regard de l'induit.

FR 2591297 A décrit un dispositif d'embrayage ralentisseur disposé entre un moteur et une boîte de vitesses et qui se monte notamment sur un véhicule industriel afin d'assurer à la fois la fonction d'embrayage et la fonction de ralentisseur pour les moteurs Diesel suralimentés.

FR2149017 A décrit un ensemble de transmission, composé d'un ralentisseur à courants de Foucault, d'un frein électromagnétique de sécurité, et d'une poulie de transmission.

FR 2782761 A décrit un dispositif d'embrayage à friction muni d'un volant d'entraînement en rotation dans un véhicule automobile pour permettre l'arrêt et la remise en route automatique du moteur à combustion interne, lorsque le véhicule est à l'arrêt pour une faible durée de façon à économiser le carburant.

L'inconvénient des ralentisseurs du genre en question réside, d'une part, dans la complexité de leur mode de commande, et, d'autre part, dans la complexité des moyens d'évacuation de la chaleur dégagée dans l'induit, un circuit à base de résistances étant nécessairement prévu à l'extérieur du ralentisseur.

La présente invention a notamment pour but de remédier à ces inconvénients.

A cet effet, l'inducteur du ralentisseur est muni d'au moins un enroulement d'électroaimant de manière à constituer un ralentisseur à courants de Foucault.

Un tel ralentisseur permet ainsi d'obtenir, grâce à la présence d'électroaimants, une maîtrise simple et facile de son flux magnétique, sans nécessiter la présence d'un circuit extérieur de dissipation de puissance tel que celui utilisé avec les ralentisseurs de l'art antérieur.

Dans des modes de réalisation préférés de l'invention, on a recours à l'une et/ou à l'autre des dispositions suivantes :
- un embrayage à au moins un disque revêtu au moins en partie d'un matériau de friction est interposé entre le moteur et la boîte de vitesses et destiné à accoupler sélectivement les arbres moteur et récepteur, le matériau de friction présentant une face radiale située en regard et destinée à venir, en position embrayée, en contact d'une face radiale de la partie rotorique ou d'un volant d'inertie solidaire en rotation de l'arbre moteur, ce qui permet de combiner avantageusement l'embrayage au ralentisseur ;
- la partie rotorique est solidaire en rotation d'un volant d'inertie monté sur l'arbre moteur ou un prolongement axial de ce dernier, du côté de l'arbre récepteur, et en porte-à-faux à l'extérieur de la paroi arrière du carter du moteur ;
- la partie rotorique est fixée au volant d'inertie par des moyens de liaison, ou selon une alternative ;
- la partie rotorique et le volant d'inertie sont formés d'une seule pièce;
- la partie rotorique comporte une pièce externe de forme sensiblement cylindrique, à symétrie de révolution autour de l'axe de l'arbre moteur, qui entoure la partie statorique, de façon à présenter une face périphérique en regard d'une face périphérique de la partie statorique, et qui constitue l'induit du ralentisseur, ainsi qu'un flasque sensiblement radial fixé ou intégré à un volant d'inertie solidaire de l'arbre moteur, ce qui correspond à un ralentisseur à flux radial, et, dans ce cas, il est possible que la partie statorique soit interposée entre le volant d'inertie et la paroi arrière du carter du moteur, à laquelle ladite partie statorique est fixée, ou que la partie statorique soit interposée entre le volant d'inertie et la paroi avant du carter de la boîte de vitesses, à laquelle ladite partie statorique est fixée ;
- la partie rotorique comporte un flasque ou disque induit radial, solidaire de l'arbre moteur et disposé axialement en regard de la partie statorique, ce qui correspond à un ralentisseur à flux axial, et, dans ce cas, il est possible que le flasque radial comporte une partie annulaire radiale externe constituant l'induit et axialement en regard de l'inducteur de forme générale annulaire de la partie statorique, et une partie annulaire radiale interne, présentant ladite face radiale de la partie rotorique contre laquelle le matériau de friction de l'embrayage vient en contact, en position embrayée.

Que le ralentisseur soit à flux magnétique radial ou axial, l'inducteur de la partie statorique peut être un inducteur à pôles entourés chacun d'un enroulement inducteur et saillant sur ladite pièce annulaire fixe de la partie statorique vers l'induit de la partie rotorique. Par contre, si le flux du ralentisseur est radial, l'inducteur de la partie statorique peut, selon une variante économique, être un inducteur à griffes et à un seul enroulement inducteur.

On peut également avoir recours à l'une et/ou l'autre des dispositions suivantes :
- le disque de l'embrayage est à commande mécanique et coopère, en position embrayée, avec un diaphragme, un plateau de pression et un couvercle qui sont solidaires en rotation de l'arbre moteur, le diaphragme étant actionné au moyen d'un organe de commande d'accouplement du type actionneur et/ou fourchette, de manière à plaquer la face radiale du disque d'embrayage contre la face radiale de la partie rotorique et/ou du volant d'inerte
- l'embrayage est agencé à l'extérieur du ralentisseur ;
- l'ensemble constitué par au moins le disque d'embrayage et le diaphragme est agencé radialement à l'intérieur de la partie statorique ;
- le disque de l'embrayage est à commande électromagnétique ;
- les moyens de liaison comprennent une ossature qui comporte au moins un flasque sensiblement radial centré sur l'axe des arbres moteur et récepteur, ledit flasque étant fixé à la paroi avant du carter de la boîte de vitesses et comportant des bras qui s'étendent à partir du flasque en direction du moteur pour la fixation de l'ossature à la paroi arrière du carter du moteur, le ralentisseur étant logé avec l'embrayage dans un espace délimité par le flasque, les bras de fixation, la paroi avant du carter de la boîte de vitesses et la paroi arrière du carter du moteur.

D'autres caractéristiques et avantages de l'invention apparaîtront au cours de la description suivante de cinq de ses formes de réalisation, données à titre d'exemple non limitatif, en regard des dessins joints.

Sur les dessins :
- la figure 1 est une vue en coupe axiale d'une première forme de réalisation du ralentisseur selon l'invention, lorsque celui-ci est assemblé entre le moteur et la boîte de vitesses ;
- la figure 2 est une vue analogue à la figure 1, représentant une seconde forme de réalisation du ralentisseur selon l'invention ;
- la figure 3 est une vue analogue à la figure 1, représentant une troisième forme de réalisation du ralentisseur selon l'invention;
- la figure 4 est une vue analogue à la figure 1, représentant une quatrième forme de réalisation du ralentisseur selon l'invention ;
- la figure 5 est une vue analogue à la figure 1, représentant une cinquième forme de réalisation du ralentisseur selon l'invention ;
- la figure 6 est une vue schématique en perspective éclatée du ralentisseur à courants de Foucault de la figure 1, avant son montage sur les carters du moteur et de la boîte de vitesses et sur le volant d'inertie du moteur ;
- la figure 7 est une vue en coupe transversale du ralentisseur de la figure 6, après assemblage de son rotor et de son stator, et
- la figure 8 est une vue schématique d'une variante de stator inducteur pour la forme de réalisation de la figure 1, et également adaptable aux formes de réalisation des figures 2, 3 et 5.

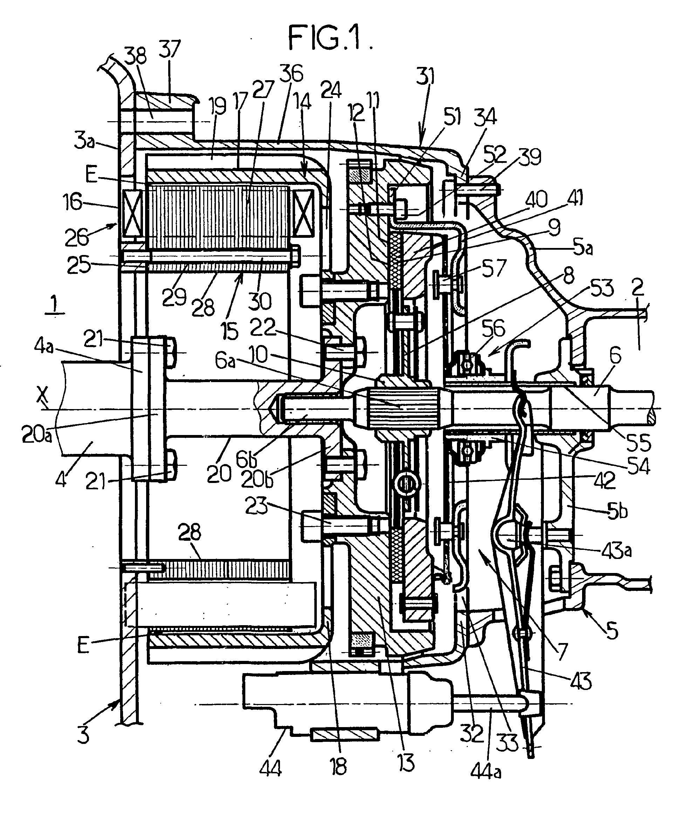

En référence à l'ensemble des figures 1 à 5, le ralentisseur à courants de Foucault selon la présente invention est intercalé entre un moteur 1 de véhicule et une boîte de vitesses 2.

Le moteur 1 comporte un carter 3 qui comporte lui-même une paroi arrière 3a orientée vers la boîte de vitesses 2 et qui s'étend sensiblement perpendiculairement à un axe X, autour duquel est entraîné en rotation l'arbre de sortie 4 ou vilebrequin du moteur 1. La boîte de vitesses 2 comporte un carter 5 qui comporte lui même une paroi avant 5a s'étendant sensiblement en vis-à-vis de la paroi arrière 3a du carter 3 du moteur 1 et traversée par l'arbre d'entrée 6 de la boîte de vitesses 2, lequel arbre d'entrée est un arbre récepteur ou mené destiné à être entraîné en rotation autour de l'axe X de l'arbre moteur 4 par ce dernier.

Un embrayage à friction 7, interposé entre le moteur 1 et la boîte de vitesses 2, est destiné, de manière connue en soi, à accoupler et désaccoupler sélectivement les arbres moteur 4 et récepteur 6 en désaccouplant l'arbre moteur 4 de l'arbre récepteur 6 (débrayage), et en réaccouplant progressivement ces deux arbres (embrayage), à chaque changement de rapport de la boîte de vitesses 2, la position embrayée étant représentée sur chacune des figures 1 à 5.

L'embrayage 7, qui a une structure connue, n'est pas, pour cette raison, décrit en détail. On note simplement que, dans les exemples des figures 1 à 5, l'embrayage 7 comprend, quel que soit son mode de commande, au moins un disque d'embrayage 8 portant, à sa périphérie, des garnitures de friction 9, et monté solidaire en rotation de l'arbre récepteur 6 par un moyeu cannelé 10, lequel permet au disque d'embrayage 8 de coulisser axialement sur des cannelures de la portion cannelée 6a de l'arbre d'entrée 6 de la boîte de vitesses 2. Dans la position embrayée représentée sur les figures 1 à 5, une face radiale 11 des garnitures 9 du disque 8 est en appui contre une face radiale 12 d'un plateau de réaction qui est un volant d'inertie 13, monté en porte-à-faux à l'extérieur de la paroi arrière 3a du carter 3 du moteur 1 et solidaire en rotation par sa partie centrale de l'arbre de sortie 4 du moteur 1, soit directement, soit par l'intermédiaire d'une rallonge 20 (figure 1) fixée en bout de l'arbre moteur 4 dans son prolongement axial vers l'arbre récepteur 6.

Dans le mécanisme d'embrayage à friction 7 à commande mécanique du disque 8 des figures 1 à 4, les garnitures de friction 9 sont destinées à être pressées, dans la position embrayée, entre le volant d'inertie 13, faisant fonction de plateau de réaction, et un plateau de pression 40 mobile axialement, et dont les déplacements axiaux sont commandés par la partie périphérique d'un diaphragme 42 élastiquement déformable, de structure connue, et de forme tronconique à l'état libre, et lui-même commandé par une butée de débrayage 53 à bague 54 montée coulissante axialement autour d'une douille cylindrique 55 entourant une portion de l'arbre récepteur 6, et à roulement à billes 56 monté autour de la bague 54 et permettant la rotation du diaphragme 42 autour de l'axe X et par rapport à la butée 53. De façon bien connue, pour que les déplacements axiaux de la butée 53 commandent les déformations du diaphragme 42, ce dernier est monté avec un certain jeu autorisant sa flexion sur des colonnettes d'appui 57 axiales solidarisant en rotation la partie périphérique du diaphragme 42 à la partie radiale interne d'un couvercle creux 41, en tôle emboutie, recourant le plateau de pression 40 et le diaphragme 42, et fixé par un rebord périphérique externe 51 à la périphérie de la partie du volant d'inertie 13 qui constitue le plateau de réaction. Le plateau de pression 40 est rendu solidaire en rotation de ce couvercle 41 par tout moyen connu (non représenté) par exemple par des languettes élastiques.

La commande du déplacement de la butée 53 entre la position embrayée des figures 1 à 4 et sa position de commande du débrayage est assurée par un organe de commande d'accouplement 44, dans cet exemple un actionneur linéaire, par exemple du type vérin hydraulique, mais pouvant être une pédale de débrayage classique, relié par un organe de transmission de mouvement 44a, dans cet exemple la tige du vérin 44, mais pouvant être un câble de traction, à une extrémité d'une fourchette 43, constituant un organe d'actionnement de la butée 53, et montée pivotante sur une rotule 43a fixe, supportée par un fond 5b du carter 5 de la boîte de vitesses 2, l'autre extrémité de la fourchette 43 étant ainsi disposée'pour pouvoir exercer une poussée axiale sur la butée de débrayage 53.

On rappelle que le fonctionnement, bien connu, d'un tel dispositif d'embrayage à friction est le suivant: dans la position embrayée des figures 1 à 4, la butée 53 est rappelée vers la droite sur les figures, et le diaphragme 42 pivote sur un appui des colonnettes 57 de sorte que sa partie périphérique pousse le plateau de pression 40 vers la gauche, ce qui provoque l'embrayage par mise en pression des garnitures 9 entre ce plateau 40 et le volant d'inertie 13, les arbres 4 et 6 étant alors solidarisés en rotation. Dans la position débrayée, l'action du vérin 44, dont la tige 44a est sortie axialement, provoque le déplacement de la butée 53 vers la gauche, et le diaphragme 42 pivote sur d'autres appuis des colonnettes 57, de sorte que sa partie périphérique se déplace vers la droite, ce qui permet le rappel du plateau de pression 40 dans le même sens et provoque le débrayage, les arbres 4 et 6 étant alors désolidarisés en rotation.

De manière générale, en référence à l'ensemble des figures 1 à 5, le ralentisseur selon l'invention se distingue des ralentisseurs de l'art antérieur en ce qu'il comprend un rotor induit 14, qui tourne avec l'arbre moteur 4, et un stator inducteur 15 comportant des enroulements électromagnétiques 16 qui sont constitués respectivement par des bobines de fil électriquement conducteur.

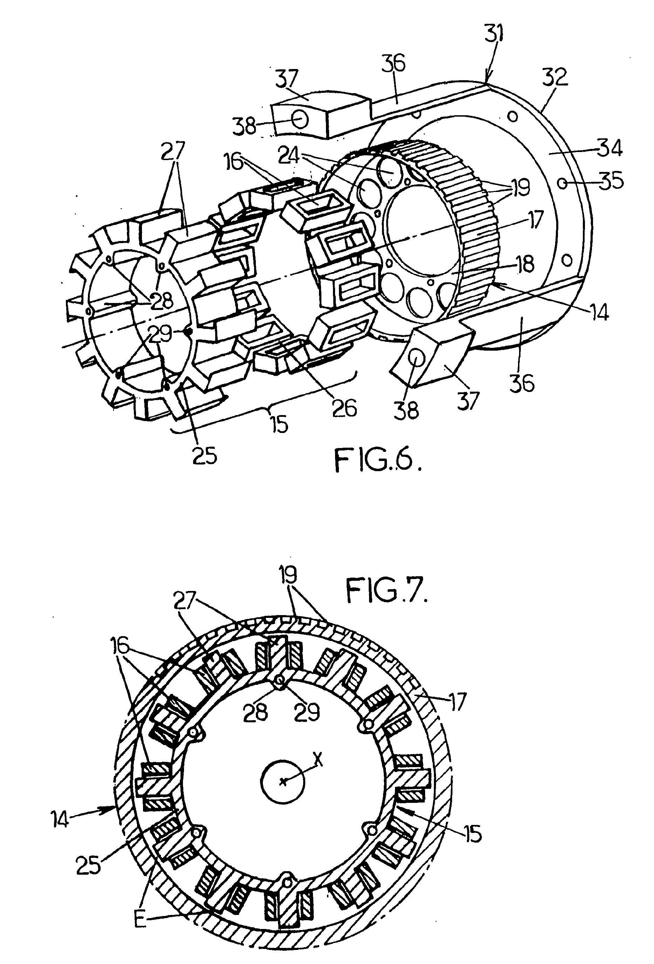

Dans une première forme de réalisation représentée sur la figure 1, et en référence également aux figures 6 et 7, le rotor 14 comporte une pièce externe, qui est sensiblement cylindrique de révolution autour de l'axe X, et donc de section sensiblement circulaire. Cette pièce est creuse de façon à entourer le stator 15. Elle comporte une enveloppe 17, et un fond 18 formant flasque sensiblement radial annulaire, l'ensemble étant réalisé en matériau ferromagnétique, généralement en acier, et pourvu, sur l'extérieur de l'enveloppe 17, de nervures 19, par exemple axiales, venues de matière avec l'enveloppe 17, et destinées à faire fonction d'ailettes de radiateur pour refroidir le rotor 14 échauffé par les courants de Foucault. Ces nervures 19 sont également susceptibles, par un profil adapté, de faire jouer au rotor 14 un rôle de ventilateur en balayant, par un courant d'air de refroidissement, les surfaces chaudes à refroidir du rotor 14, lorsque le ralentisseur est en service.

Plus particulièrement en référence à la figure 1, le rotor 14 est disposé coaxialement à l'axe X de l'arbre moteur 4, le flasque 18 étant relié à l'arbre moteur 4 au moyen de la rallonge axiale 20, dont une extrémité est fixée par une bride radiale 20a sur une bride d'extrémité 4a de l'arbre 4 par des vis axiales 21, et dont l'autre extrémité, présentant un alésage borgne coaxial logeant et guidant en rotation l'extrémité voisine 6b de l'arbre d'entrée 6 de la boîte de vitesses 2, est fixée par une autre bride radiale 20b au volant d'inertie annulaire 13 par des vis axiales 22. En outre, le flasque 18 du rotor 14 est fixé au volant d'inertie 13 par des vis axiales 23 qui traversent la partie radiale interne du flasque 18 et sont fixées dans le volant d'inertie 13.

En référence à nouveau aux figures 1, 6 et 7, le flasque 18 annulaire est percé d'une pluralité de trous 24, par exemple circulaires, dont l'utilité sera vue plus loin dans la description.

Dans l'exemple représenté, le stator 15 comporte deux couronnes 25 et 26 qui présentent chacune une forme sensiblement annulaire. Des noyaux polaires 27 font saillie sur la surface périphérique externe de la couronne 25, dans une direction radiale par rapport à cette dernière. Lesdits noyaux polaires 27, qui sont au nombre de douze dans l'exemple représenté, mais dont le nombre peut être quelconque, sont régulièrement répartis autour de la couronne 25, chaque noyau polaire 27 s'étendant parallèlement à l'axe X de l'arbre moteur 4. La couronne 26 est, quant à elle, constituée par une succession de douze bobines électromagnétiques 16 proches les unes des autres de manière à définir sensiblement un cercle centré sur l'axe X de l'arbre de sortie 4 du moteur 1. La couronne 26 a un diamètre interne légèrement supérieur au diamètre externe de la couronne 25 de façon à être assemblée coaxialement à la couronne 25 par emboîtement de chaque noyau polaire 27 dans une bobine 16 respective.

Les différentes bobines électromagnétiques 16 sont reliées à une source de courant électrique continu, telle que, de préférence, la batterie (non représentée) du véhicule, à travers des organes de commande et de réglage appropriés (non représentés).

Lorsque le ralentisseur est alimenté, les bobines électromagnétiques 16 sont parcourues par un courant électrique et génèrent des champs magnétiques, qui génèrent à leur tour des courants induits ou courants de Foucault dans le rotor 14, qui défile alors en regard des noyaux polaires 27 alternativement positifs et négatifs. Il en résulte un couple de ralentissement de l'arbre moteur 4 et un échauffement du rotor 14 que compensent en partie la convection forcée par la ventilation et la radiation thermique par les nervures 19.

Un tel montage du stator 15 permet donc avantageusement de maîtriser le flux magnétique de manière plus simple que dans les ralentisseurs de l'art antérieur. De plus, les courants induits n'ayant pas à être acheminés par des fils vers les charges dissipatives, on peut atteindre des densités de courant plus importants et donc une densité de puissance nettement supérieure à celle des ralentisseurs de l'art antérieur.

Il est fait en sorte que l'ensemble statorique inducteur constitué par l'assemblage des deux couronnes 25 et 26 présente un diamètre externe et une longueur axiale légèrement inférieurs respectivement au diamètre interne et à la longueur axiale du rotor 14, de telle façon que, lors du montage du ralentisseur, cet ensemble est introduit dans la pièce externe 17-18 du rotor 14, un entrefer E de faible épaisseur (par exemple de 1 à 3 mm, voir figure 7) étant laissé libre entre la surface interne de l'enveloppe 17 du rotor 14 et les noyaux polaires 27 correspondants de la couronne 25 du stator 15. Une telle disposition permet ainsi à la pièce externe 17-18 du rotor 14 de défiler autour des noyaux polaires 27 du stator 15 par rotation autour de l'axe X.

Toujours en référence aux figures 1, 6 et 7, la couronne 25 du stator 15 est pourvue, sur sa périphérie intérieure, de bossages 28 qui s'étendent selon la direction de l'axe X de l'arbre moteur 4. Dans l'exemple représenté, ces bossages 28 sont au nombre de six et sont disposés respectivement dans le prolongement d'un premier, troisième, cinquième, septième, neuvième et onzième noyau polaire 27 successif. Les bossages 28 sont percés chacun d'un alésage axial 29, lequel est destiné à recevoir une vis axiale 30 pour la fixation de la couronne 25 du stator 15 à la paroi arrière 3a du carter 3 du moteur 1, autour d'une ouverture ménagée dans cette paroi arrière 3a pour le passage de l'arbre moteur 4 et de la liaison du volant d'inertie 13 à cet arbre 4.

En référence à la figure 1, une ossature 31, qui entoure le ralentisseur 14-15 et l'embrayage 7, est elle-même fixée à la paroi arrière 3a du carter 3 du moteur 1 du véhicule.

Plus particulièrement en référence aux figures 1 et 6, l'ossature 31 est une pièce rigide qui peut être réalisée par exemple en alliage de fonte et d'aluminium. Cette pièce comporte un flasque 32 qui présente une forme sensiblement annulaire et qui est sensiblement radial, coaxialement à l'axe X. Le flasque 32 comporte une ouverture centrale 33 pour son allégement et le passage d'éléments de l'embrayage 7 d'accouplement de l'arbre 6 d'entrée de la boîte de vitesses 2 au volant d'inertie 13 du moteur 1 et au rotor 14 du ralentisseur. Le flasque 32 comporte en outre une partie périphérique 34 par laquelle le flasque 32 est fixé à la paroi avant 5a du carter 5 de la boîte de vitesses 2 par des vis 39 traversant des trous 35 percés dans cette partie 34. L'ossature 31 comporte également des bras 36 qui s'étendent chacun sensiblement dans la direction de l'axe X, à partir du bord externe de la partie périphérique 34 du flasque 32. Chaque bras 36 comporte une base 37 percée d'un trou axial 38 qui est adapté pour recevoir une vis de manière à pouvoir fixer l'ossature 31 sur la paroi arrière 3a du carter 3 du moteur 1, comme cela est représenté sur la figure 1. L'ossature 31 est ainsi montée en pont entre les carters 3 et 5 du moteur 1 et de la boîte de vitesses 2.

Comme on peut mieux le voir sur la figure 6, les bras 36 sont au nombre de trois et sont répartis à intervalles réguliers de 120° autour du flasque 32.

Il est fait en sorte que, d'une part, le flasque 32 présente un diamètre externe légèrement supérieur à celui de l'enveloppe 17 du rotor 14 et, que, d'autre part, les bras de fixation 36 présentent une longueur suffisamment supérieure à la longueur axiale du rotor 14, de manière à ce qu'en position montée sur la paroi arrière 3a du carter 3 du moteur 1, l'embrayage 7 et le ralentisseur 14-15 soient logés entièrement entre le flasque 32 de l'ossature 31, les bras 36 de cette dernière, la paroi arrière 3a du carter 3 du moteur 1, et la paroi avant 5a du carter 5 de la boîte de vitesses 2, comme on peut le voir sur la figure 1.

Dans l'exemple représenté sur la figure 1, la disposition du ralentisseur est telle que le mécanisme de l'embrayage 7, comprenant essentiellement le disque d'embrayage 8, le plateau 40, le couvercle 41, le diaphragme 42, et la fourchette 43, est agencé axialement à l'extérieur du ralentisseur 14-15, entre le volant d'inertie 13 et la paroi avant 5a du carter 5 de la boîte de vitesses 2.

Comme on peut le voir également sur la figure 1, les bras de fixation 36 de l'ossature 31 présentent une longueur nettement supérieure à la longueur axiale du rotor 14 de manière à entourer également le volant d'inertie 13, le disque d'embrayage 8, le plateau 40, le couvercle 41 et le diaphragme 42.

Une telle conformation de l'ossature 31 et du ralentisseur 14-15 permet ainsi de réaliser un assemblage compact du ralentisseur et de l'embrayage 7 entre le carter 3 du moteur 1 et celui 5 de la boîte de vitesses 2, l'actionneur 44 de l'embrayage 7 étant également supporté par l'ossature 31.

En outre, le rotor 14 présente l'avantage, compte tenu de sa conformation et de son agencement, de pouvoir jouer le rôle d'un volant d'inertie venant en complément du volant d'inertie 13.

Cet assemblage présente également l'avantage d'être particulièrement léger, non seulement en raison de la géométrie cylindrique creuse de l'ensemble constitué par l'ossature 31 et le ralentisseur 14-15, mais également en raison de la présence des trous 24 pratiqués dans le flasque 18 du rotor 14. Il convient de noter que les trous 24 ont également pour fonction, d'une part, de permettre la circulation d'air de refroidissement en direction du stator 15 de manière à réduire l'échauffement des bobines électromagnétiques 16, et, d'autre part, de réduire l'échauffement du volant d'inertie 13 par conduction à partir du rotor induit 14.

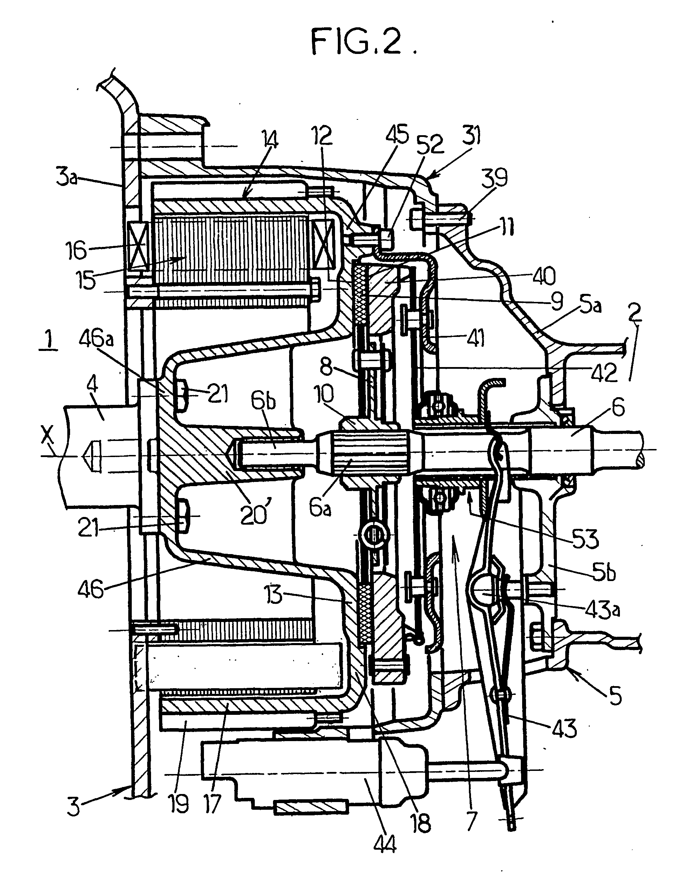

Dans une seconde forme de réalisation représentée sur la figure 2, le ralentisseur selon l'invention se distingue du ralentisseur de la figure 1 uniquement par le fait que le rotor 14 est avantageusement formé d'une seule pièce avec le volant d'inertie 13, au lieu de constituer une pièce séparée vissée sur le volant d'inertie 13.

A cet effet, la pièce externe 17-18 du rotor 14 comporte un flasque radial 18, avec une partie surépaissie 45 dans laquelle est vissée au moins une vis axiale 52 de fixation du couvercle 41 lié au diaphragme 42, et qui se prolonge radialement vers l'intérieur par le volant d'inertie 13 comportant une partie centrale 46 en forme de cloche. La partie centrale 46 du rotor 14 ou volant d'inertie 13 présente une concavité qui est dirigée vers la boîte de vitesses 2 et comporte un fond 46a qui est traversé par des vis axiales 21 pour la fixation du volant 13 ou rotor 14 à l'arbre moteur 4. Une partie tubulaire axiale est formée en saillie au centre de la face interne du fond 46a de manière à former une rallonge axiale 20' pour le logement et le guidage en rotation coaxiale de l'arbre d'entrée 6 de la boîte de vitesses 2 dans la rallonge 20' prolongeant axialement l'arbre moteur 4.

Compte tenu de la conformation et de la disposition du rotor 14 telles que représentées sur la figure 2, le disque d'embrayage 8 est, en position embrayée, pressé directement contre la surface radiale externe du flasque 18 du rotor 14. Le rotor 14 intègre le volant d'inertie 13 et la rallonge 20' de l'arbre moteur 4 ou vilebrequin.

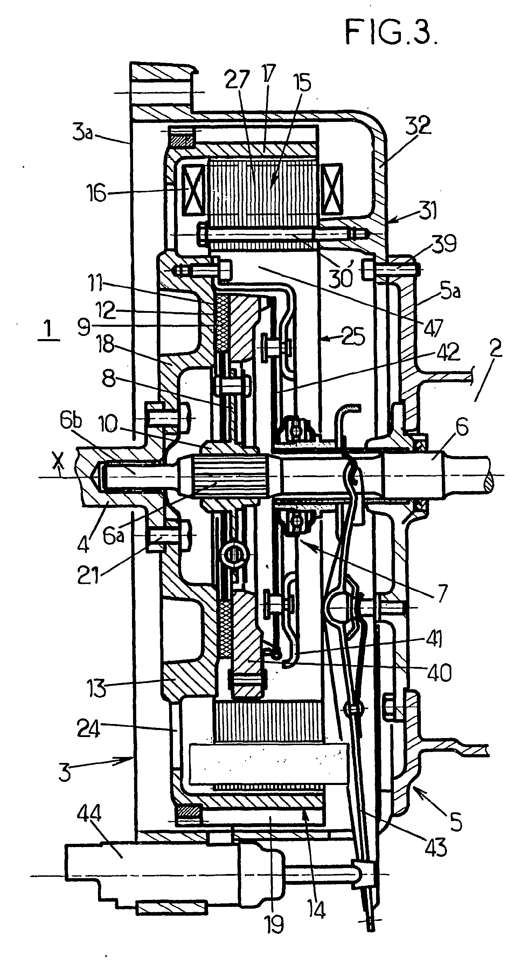

Dans une troisième forme de réalisation, représentée sur la figure 3, le ralentisseur selon l'invention se distingue uniquement du ralentisseur de la figure 2, par une conformation différente du rotor 14, intégrant également le volant d'inertie 13.

Dans l'exemple de la figure 3, le rotor 14 comporte, de la même façon que dans la seconde forme de réalisation, une pièce externe creuse 17-18 qui est sensiblement cylindrique de révolution autour de l'axe X, et qui présente une section sensiblement circulaire, avec une enveloppe axiale 17 et un flasque radial 18 percé de trous 24. Mais, à la différence des formes de réalisation précédentes, le ralentisseur (14, 15) selon la troisième forme de réalisation est disposé de façon à ce que son rotor 14 présente une concavité qui est dirigée vers la boîte de vitesses 2.

A cet effet, le flasque radial 18 du rotor 14 est disposé dans un plan sensiblement perpendiculaire à l'axe X et comporte une partie radiale interne massive du volant d'inertie 13, présentant une face radiale, décalée axialement vers la boîte de vitesses 2, comme face d'appui contre les garnitures de friction 9 de l'embrayage 7, et qui est reliée directement à l'arbre moteur 4, par des vis axiales 21, au voisinage de la paroi arrière 3a du carter 3 du moteur 1. Quant au stator 15, sa couronne 25 est solidaire de la paroi avant 5a du carter 5 de la boîte de vitesses 2 au lieu d'être solidaire de la paroi arrière 3a du carter 3 du moteur 1. A cet effet, les alésage 29 de la couronne 25 sont traversés chacun par une vis axiale 30' pour la fixation de la couronne 25 au flasque radial 32 de l'ossature 31, ce flasque 32 étant lui-même fixé au carter 5 par les vis axiales 39.

Une telle disposition du ralentisseur s'avère particulièrement avantageuse en ce sens qu'elle permet de réduire considérablement son encombrement axial, puisqu'il n'est plus nécessaire d'utiliser de rallonge axiale.

Un autre avantage de cette disposition réside dans le fait que l'ouverture centrale 47 de la couronne 25 du stator 15 peut ainsi être rendue complètement disponible. Il en résulte que les diamètres du rotor 14 et du stator 15 peuvent être légèrement augmentés pour pouvoir loger, dans l'ouverture centrale 47 de la couronne 25 du stator 15, le mécanisme de l'embrayage 7 comportant à la fois le disque d'embrayage 8 avec les garnitures 9, le plateau 40, le couvercle 41 et le diaphragme 42, de façon à ce qu'en position embrayée, les garnitures du disque d'embrayage 8 soient pressées axialement contre la surface interne du flasque 18 du rotor 14. Il en résulte également que l'ossature 31 du ralentisseur peut être conformée de façon à pouvoir loger la fourchette 43 de l'embrayage 7.

Cette troisième forme de réalisation sera donc choisie préférentiellement si on recherche une optimisation de la compacité axiale de l'assemblage du ralentisseur et de l'embrayage 7 entre le carter 3 du moteur 1 et celui 5 de la boîte de vitesses 2.

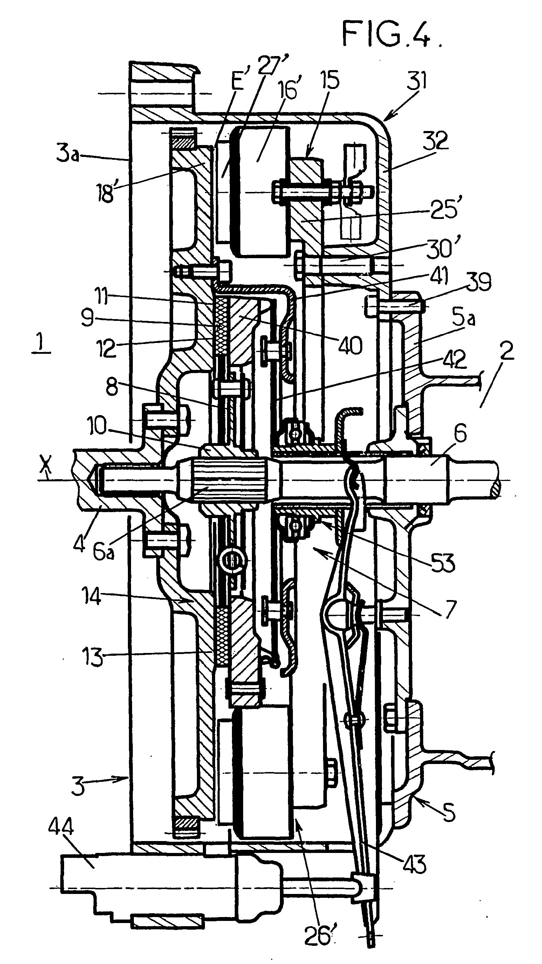

Dans une quatrième forme de réalisation, représentée sur la figure 4, le ralentisseur selon l'invention se distingue de celui de la figure 3, uniquement par le fait que son champ magnétique est axial et non plus radial.

A cet effet, le rotor 14 ne comporte plus d'enveloppe 17, et se présente uniquement sous la forme d'un flasque ou disque induit 18' qui est similaire au flasque radial 18 du rotor 14 représenté sur la figure 3, et constitue simultanément le rotor induit 14 proprement dit, dans sa partie radiale externe, et le volant d'inertie 13, dont la partie radiale interne coopère avec la garniture de friction 9 de l'embrayage 7, par une face de friction radiale sensiblement dans le plan radial passant par l'entrefer E' décrit ci-dessous.

Quant au stator 15, il comporte toujours deux couronnes coaxiales 25' et 26', mais la couronne 25' est agencée en regard du disque 18', dans un plan sensiblement perpendiculaire à l'axe de rotation X, et est fixée, à la manière de la couronne 25 de la figure 3, sur le flasque radial 32 de l'ossature 31 par des vis axiales 30'. La couronne 25' supporte des noyaux ferromagnétiques 27' s'étendant longitudinalement parallèlement à l'axe X et qui sont répartis à intervalles réguliers sur un cercle centré sur l'axe de rotation X et chacun entouré de l'une des bobines 16' formant l'autre couronne 26'. Les sens d'enroulement du fil conducteur alternent d'une bobine 16' à la suivante, de façon à faire alterner les polarités des enroulements inducteurs.

Un entrefer axial E' de faible épaisseur est traversé par le flux magnétique entre les pôles des bobines 16' et le disque induit 18' qui défile devant eux.

Dans la forme de réalisation représentée sur la figure 4, l'espace disponible entre le disque induit 18' du rotor 14 et la couronne 25' du stator 15 est suffisant pour pouvoir loger le disque 8 et le plateau 40, le diaphragme 42 et le couvercle 41, de manière à réaliser un assemblage du ralentisseur et de l'embrayage 7, entre les carters 3 et 5 du moteur 1 et la boîte de vitesses 2, qui est aussi compact que celui représenté sur la figure 3.

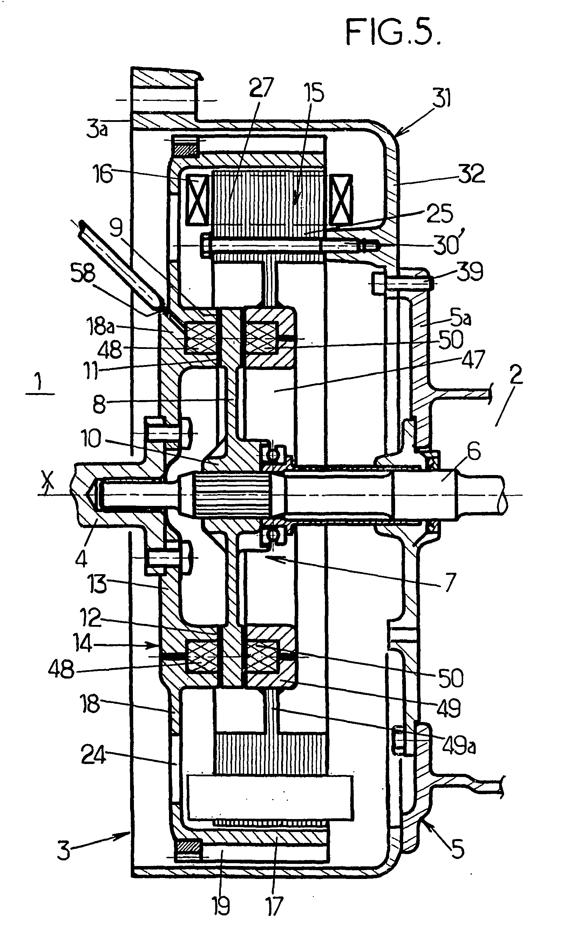

Dans une cinquième forme de réalisation représentée sur la figure 5, l'ensemble ralentisseur-embrayage selon l'invention se distingue de celui de la figure 3, essentiellement par le fait que le disque 8 de l'embrayage 7 est à commande électromagnétique. Il y a donc suppression du mécanisme de commande d'embrayage.

A cet effet, le flasque radial 18 du rotor 14 comporte des électroaimants 48 logés dans une partie annulaire 18a axialement surépaissie de ce flasque 18, et régulièrement disposés en couronne coaxiale autour de l'axe de rotation X. Par ailleurs, une couronne fixe 49, retenue dans l'ouverture centrale 47 de la couronne 25 du stator 15 et solidaire de cette dernière par un anneau 49a, comporte également des électroaimants 50 régulièrement répartis en direction circonférentielle. La couronne fixe 49 est agencée en regard de la partie 18a du flasque 18 du rotor 14, coaxialement à l'axe de rotation X, les électroaimants 48 du rotor 14 et les électroaimants 50 de la couronne fixe 49 étant eux-mêmes en vis-à-vis les uns des autres, mais de part et d'autre du disque d'embrayage 8, ainsi interposé entre le flasque 18 du rotor 14 et la couronne fixe 49.

Le rotor 14 du ralentisseur intègre le volant d'inertie 13, et la surface de friction du volant d'inertie 13 contre le disque 8 est présentée sur le flan intérieur du rotor 14 et délimitée par la surface radiale que la partie 18a du flasque 18 logeant les électroaimants 48 présente vers la couronne fixe 49 du stator 15.

Lorsque les électroaimants 48 sont parcourus par un courant alimenté par le contact tournant 58, les électroaimants 50 n'étant, quant à eux, pas alimentés, le disque 8, qui est métallique, est attiré contre le flasque 18, de manière à assurer l'embrayage, comme cela est représenté sur la figure 5. Le rotor 14, solidaire de l'arbre moteur 4, entraîne l'arbre 6 de la boîte de vitesses 2. Ensuite les bobines 16 du stator 15, disposées en étoile autour du stator 15, sont alimentées en courant, et le ralentisseur peut être activé puis désactivé.

A l'inverse, lorsque les électroaimants 50 sont parcourus par un courant, les électroaimants 48 n'étant, quant à eux, pas alimentés, le disque 8 est attiré contre la couronne fixe 49 solidaire du stator 15, et donc fixée aux carters 3 et 5 par l'intermédiaire de l'ossature 31, de manière à assurer le débrayage (non représenté). De ce fait, l'arbre récepteur 6 n'est plus entraîné par l'arbre moteur 4.

Dans tous les exemples de réalisation, l'alimentation électrique des enroulements inducteurs du stator 15 est commandée par un circuit de commande (non représenté) et n'est possible que lorsque le circuit de commande reçoit, d'au moins un détecteur approprié, un signal indiquant que l'embrayage 7 est en position embrayée.

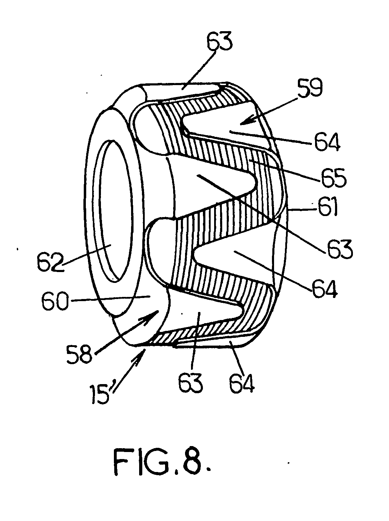

La figure 8 représente schématiquement une variante économique de stator, substituable au stator 15 à pôles saillants 27 et bobines 16 des réalisations des figures 1 à 3 et 5, et pouvant coopérer, dans le ralentisseur, avec un rotor 14 identique à celui de ces figures.

Le stator 15' de la figure 8 comporte deux couronnes 58 et 59, identiques l'une à l'autre, de forme sensiblement annulaire, et constituées chacune d'un flasque radial 60 ou 61, percé d'une ouverture centrale coaxiale 62, et d'une succession de griffes 63 ou 64. Dans l'exemple représenté, ces griffes 63 et 64 ont une forme sensiblement triangulaire, et sont réparties à intervalles réguliers autour de leurs couronnes 58 et 59 respectives, chaque griffe 63, 64 s'étendant selon un axe parallèle à l'axe X de l'arbre moteur (non représenté), à partir du bord périphérique du flasque 60, 61 qui lui est associé. En outre, chaque griffe 63 de la couronne 58 est intercalé entre deux griffes voisines 64 de la couronne 59, et réciproquement. Les couronnes 58 et 59 sont assemblées coaxialement l'une à l'autre en étant fixées sur un manchon cylindrique interne fixe, qu'elles entourent, et donc non visible sur la figure 8. Ce manchon interne est entouré d'un enroulement 65 d'un grand nombre de spires successives d'un fil conducteur, de sorte à former un enroulement inducteur 65 sensiblement enveloppé par les deux ensembles de griffes 63 et 64. Le manchon interne supportant l'enroulement 65 est, comme la couronne 25 des exemples des figures 1 à 3 et 5, destiné à être fixé par des vis axiales à l'un des carters 3 et 5 du moteur 1 et de la boîte de vitesses 2, éventuellement par l'intermédiaire d'une ossature telle que 31.

Le principe de fonctionnement d'un ralentisseur équipé d'un tel stator 15' est analogue à celui des ralentisseurs décrits ci-dessus en référence aux figures 1 à 3 et 5. Lorsque l'unique enroulement inducteur 65 est alimenté en courant électrique il se produit un champ magnétique canalisé par les griffes 63 et 64 et générant, dans le rotor induit tournant autour de ces griffes, des courants de Foucault qui échauffent ce rotor. Il en résulte un couple de ralentissement de l'arbre moteur 4 et de l'arbre récepteur 6, puisque ces deux arbres sont solidarisés en rotation par l'embrayage 7, lorsque le ralentisseur est activé.

Bien entendu la présente invention n'est pas limitée aux exemples de réalisations décrits.

Ainsi en variante le vérin 44 est du type concentrique en étant traversé centralement par l'arbre récepteur 6 en sorte que son corps fixe est fixé sur la paroi 5a tandis que son piston est solidaire de la bague 54 de la butée de débrayage 53.

Dans ce cas la fourchette de débrayage 43 est supprimée ce qui permet de réduire l'encombrement axial de l'ensemble ralentisseur à courants de Foucault-embrayage.

En variante le diaphragme 42 est monté de manière pivotante sur le couvercle 41 à l'aide de pattes issues du couvercle, de couronnes attelées au couvercle ou de tout autre moyen comme décrit par exemple dans le document FR-A-2 456 877.

En variante la butée de débrayage 53 agit en tirant sur la périphérie interne du diaphragme 42, c'est-à-dire sur la périphérie interne des doigts de celui-ci, comme décrit par exemple dans le document FR-A-2 463 874.

Pour réduire encore l'encombrement axial, l'embrayage 7 comporte un dispositif de rattrapage d'usure pour maintenir le diaphragme 42 dans une position sensiblement constante lorsque l'embrayage est en position engagée (garnitures de friction 9 serrées entre les plateaux de pression 40 et de réaction 13). Le plateau de pression 40 est alors en deux parties mobiles l'une par rapport à l'autre à l'encontre de moyens élastiques à action circonférentielle. Le diaphragme 42 peut être remplacé par des ressorts à boudin, ou des rondelles de type Belleville associées à des leviers de débrayage.

Des moyens peuvent être prévus pour réduire la température du volant 13 et donc des garnitures de friction 9.

Ainsi le volant 13 de la figure 1 est en variante doté au niveau des vis 23 de passages pour communication de l'espace délimité par le volant 13 et le fond 18 avec l'espace interne délimité par le volant 13 et le disque 8.

Le fond 18 est fixé en variante directement sur la bride radiale 20b. Dans ce cas le volant 13 est fixé sur le fond 18 radialement au-delà de la bride 20b et à la faveur de bossages issus par exemple du volant 13 et circulation de l'air entre les bossages. Le volant 13 a alors une forme plus simple.

En variante le fond 18 est fixé sur la bride 20b et présente à sa périphérie interne un manchon d'orientation axiale dirigé vers le volant 13.

Un palier, tel qu'un roulement à une ou deux rangées de billes, intervient alors entre la périphérie externe du manchon et la périphérie interne du volant 13 ou d'un disque à manchon cylindrique solidaire du volant 13. Des moyens élastiques à action circonférentielle interviennent entre le fond 18 et le volant 13 en sorte qu'il est formé un double volant amortisseur de torsion.

On appréciera que les nervures 19 de l'enveloppe 17 d'orientation axiale rigidifient l'enveloppe 17 et constituent également des radiateurs.

Dans tous les cas le ralentisseur électrique comporte, lorsque le ou les enroulements sont alimentés électriquement, une pluralité de pôle Nord et Sud répartis régulièrement circonférentiellement. Ici la couronne 25 et les couronnes 58, 59 sont en acier de type ferromagnétique.

## Revendications

1. Ralentisseur électrique, destiné à être intercalé entre un arbre moteur (4) entraîné en rotation autour de son axe (X), et qui est l'arbre de sortie ou vilebrequin d'un moteur (1), notamment de véhicule, et un arbre récepteur (6), destiné à être entraîné autour dudit axe (X) et qui est l'arbre d'entrée d'une boîte de vitesses (2), le moteur (1) et la boîte de vitesses (2) comportant chacun un carter, le carter (3) du moteur (1) comportant une paroi arrière (3a) s'étendant sensiblement transversalement à l'axe (X) des arbres moteur (4) et récepteur (6), et le carter (5) de la boîte de vitesse (2) comportant une paroi avant (5a) orientée en direction de la paroi arrière (3a) du carter (3) du moteur (1), le ralentisseur étant monté par des moyens de liaison (31) entre les deux carters (3, 5) et comprenant une partie rotorique (14) solidaire en rotation coaxiale de l'arbre moteur (4), une partie statorique (15) comportant au moins une pièce annulaire fixe (25) traversée coaxialement par l'un des arbres moteur (4) et récepteur (6) ou un prolongement axial (20) de l'un au moins desdits arbres (4, 6), et solidaire de l'une au moins des parois arrière (3a) du carter (3) du moteur (1) et avant (5a) du carter (5) de la boîte de vitesses (2), un induit (17) appartenant à la partie rotorique (14), et un inducteur (16-27) appartenant à la partie statorique (15), l'inducteur étant disposé sur ladite pièce annulaire fixe (25) de la partie statorique (15), en regard de l'induit (17),
**caractérisé en ce que** l'inducteur (16-27) du ralentisseur est muni d'au moins un enroulement d'électroaimant (16) de manière à constituer un ralentisseur à courants de Foucault.

2. Ralentisseur selon la revendication 1, **caractérisé en ce qu'**un embrayage (7) à au moins un disque (8) revêtu au moins en partie d'un matériau de friction (9) est interposé entre le moteur (1) et la boîte de vitesses (2) et destiné à accoupler sélectivement les arbres moteur (4) et récepteur (6), le matériau de friction (9) présentant une face radiale (11) située en regard et destinée à venir, en position embrayée, en contact d'une face radiale (12) de la partie rotorique (14) ou d'un volant d'inertie (13) solidaire en rotation de l'arbre moteur (4).

3. Ralentisseur selon la revendication 1, **caractérisé en ce que** la partie rotorique (14) est solidaire en rotation d'un volant d'inertie (13) monté sur l'arbre moteur (4) ou un prolongement (20) axial dudit arbre (4), du côté de l'arbre récepteur (6), et en porte-à-faux à l'extérieur de la paroi arrière (3a) du carter (3) du moteur (1).

4. Ralentisseur selon la revendication 3, **caractérisé en ce que** la partie rotorique (14) est fixée au volant d'inertie (13) par des moyens de liaison (23).

5. Ralentisseur selon la revendication 3, **caractérisé en ce que** la partie rotorique (14) et le volant d'inertie (13) sont formés d'une seule pièce.

6. Ralentisseur selon la revendication 2, **caractérisé en ce que** la partie rotorique (14) comporte une pièce externe (17) de forme sensiblement cylindrique, à symétrie de révolution autour de l'axe (X) de l'arbre moteur (4), qui entoure la partie statorique (15), de façon à présenter une face périphérique en regard d'une face périphérique de la partie statorique (15), et qui constitue l'induit du ralentisseur, ainsi qu'un flasque (18) sensiblement radial fixé ou intégré à un volant d'inertie (13) solidaire de l'arbre moteur (4).

7. Ralentisseur selon la revendication 6, **caractérisé en ce que** la pièce externe (17) est pourvue sur l'extérieur de nervures (19) pour refroidir le rotor (14).

8. Ralentisseur selon la revendication 6, **caractérisé en ce que** la partie statorique (15) est interposée entre le volant d'inertie (13) et la paroi arrière (3a) du carter (3) du moteur (1) à laquelle ladite partie statorique (15) est fixée.

9. Ralentisseur selon la revendication 6, **caractérisé en ce que** la partie statorique (15) est interposée entre le volant d'inertie (13) et la paroi avant (5a) du carter (5) de la boîte de vitesses (2) à laquelle ladite partie statorique (15) est fixée.

10. Ralentisseur selon la revendication 2, **caractérisé en ce que** la partie rotorique (14) comporte un flasque induit (18) radial, solidaire de l'arbre moteur (4) et disposé axialement en regard de la partie statorique (15).

11. Ralentisseur selon la revendication 10 telle que rattachée à la revendication 2, **caractérisé en ce que** le flasque radial (18') comporte une partie annulaire radiale externe constituant l'induit et axialement en regard de l'inducteur (16'-27') de forme générale annulaire de la partie statorique (15), et une partie annulaire radiale interne, présentant ladite face radiale (12) de la partie rotorique (14) contre laquelle le matériau de friction (9) de l'embrayage vient en contact, en position embrayée.

12. Ralentisseur selon la revendication 1, **caractérisé en ce que** l'inducteur de la partie statorique (15) est un inducteur à pôles (27) entourés chacun d'un enroulement inducteur (16) et saillant sur ladite pièce annulaire fixe (25) de la partie statorique (15) vers l'induit de la partie rotorique (14).

13. Ralentisseur selon la revendication 1, **caractérisé en ce que** l'inducteur de la partie statorique (15') est un inducteur à griffes (63, 64) et à un seul enroulement inducteur (65).

14. Ralentisseur selon la revendication 2, **caractérisé en ce que** le disque (8) de l'embrayage (7) est à commande mécanique et coopère, en position embrayée, avec un diaphragme (42), un plateau de pression (51) et un couvercle (52) qui sont solidaires en rotation de l'arbre moteur (4), le diaphragme (42) étant actionné au moyen d'un organe de commande d'accouplement, du type actionneur (44) et/ou fourchette (43), de manière à plaquer la face radiale (11) du disque d'embrayage (8) contre la face radiale (12) de la partie rotorique (14) et/ou du volant d'inertie (13).

15. Ralentisseur selon la revendication 8, **caractérisé en ce que** l'embrayage (7) est agencé à l'extérieur du ralentisseur.

16. Ralentisseur selon la revendication 9, **caractérisé en ce que** l'ensemble constitué au moins par le disque d'embrayage (8) et le diaphragme (42) est agencé radialement à l'intérieur de la partie statorique (15).

17. Ralentisseur selon la revendication 2, **caractérisé en ce que** le disque (8) de l'embrayage (7) est à commande électromagnétique.

18. Ralentisseur selon la revendication 2, **caractérisé en ce que** les moyens de liaison comprennent une ossature (31) qui comporte au moins un flasque (32) sensiblement radial centré sur l'axe (X) des arbres moteur (4) et récepteur (6), ledit flasque (32) étant fixé à la paroi avant (5a) du carter (5) de la boîte de vitesses (2), et comportant des bras (36) qui s'étendent à partir du flasque (32) en direction du moteur (1) pour la fixation de l'ossature (31) à la paroi arrière (3a) du carter (3) du moteur (1), le ralentisseur étant logé avec l'embrayage (7) dans un espace délimité par le flasque (32), les bras de fixation (36), la paroi avant (5a) du carter (5) de la boîte de vitesses (2), et la paroi arrière (3a) du carter (3) du moteur (1).

## Claims

1. Electric retarder designed to be interposed between an engine shaft (4) driven in rotation about its axis (X), and which is the output shaft or crankshaft of an engine (1), in particular of a vehicle, and a main shaft (6) designed to be driven about said axis (X) and which is the input shaft of a gearbox (2), the engine (1) and gearbox (2) each having a crankcase, the crankcase (3) of the engine (1) having a rear wall (3a) extending substantially transversely with respect to the axis (X) of the engine (4) and main (6) shafts, and the crankcase (5) of the gearbox (2) having a front wall (5a) oriented in the direction of the rear wall (3a) of the crankcase (3) of the engine (1), the retarder being mounted between the two crankcases (3, 5) by connecting means (31) and comprising a rotor part (14) which rotates in coaxial unison with the engine shaft (4), a stator part (15) comprising at least one fixed annular component (25) through which one of the engine (4) and main (6) shafts or an axial extension (20) of at least one of said shafts (4, 6) extends coaxially, and integral with at least one of the rear wall (3a) of the crankcase (3) of the engine (1) and front wall (5a) of the crankcase (5) of the gearbox (2), an armature (17) belonging to the rotor part (14) and a primary winding (16-27) belonging to the stator part (15), the primary winding being disposed on said fixed annular component (25) of the stator part (15) facing the armature (17),
**characterised in that** the primary winding (16-27) of the retarder is fitted with at least one electromagnet winding (16) in order to form a Foucault current retarder.

2. Retarder as claimed in claim 1, **characterised in that** a clutch (7) with at least one disc (8) at least partially lined with a friction material (9) is interposed between the engine (1) and the gearbox (2) and is designed to couple the engine (4) and main (6) shafts selectively, the friction material (9) having a radial face (11) disposed facing and, in the engaged position, designed to move into contact with a radial face (12) of the rotor part (14) or a flywheel (13) integral with the engine shaft (4) in rotation.

3. Retarder as claimed in claim 1, **characterised in that** the rotor part (14) rotates in unison with a flywheel (13) mounted on the engine shaft (4) or an axial extension (20) of said shaft (4), at the main shaft end (6) and in overhanging arrangement on the outside of the rear wall (3a) of the crankcase (3) of the engine (1).

4. Retarder as claimed in claim 3, **characterised in that** the rotor part (14) is secured to the flywheel (13) by connecting means (23).

5. Retarder as claimed in claim 3, **characterised in that** the rotor part (14) and the flywheel (13) are formed from a single piece.

6. Retarder as claimed in claim 2, **characterised in that** the rotor part (14) comprises an external component (17) of a substantially cylindrical shape, symmetrical in revolution about the axis (X) of the engine shaft (4), which surrounds the stator part (15) so that a peripheral face is directed towards a peripheral face of the stator part (15), and which constitutes the armature of the retarder, as well as a substantially radial flange (18) attached to or integrated with a flywheel (13) integral with the engine shaft (4).

7. Retarder as claimed in claim 6, **characterised in that** the external component (17) is provided with ribs (19) on the exterior in order to cool the rotor (14).

8. Retarder as claimed in claim 6, **characterised in that** the stator part (15) is interposed between the flywheel (13) and the rear wall (3a) of the crankcase (3) of the engine (1) to which said stator part (15) is fixed.

9. Retarder as claimed in claim 6, **characterised in that** the stator part (15) is interposed between the flywheel (13) and the front wall (5a) of the crankcase (5) of the gearbox (2) to which said stator part (15) is fixed.

10. Retarder as claimed in claim 2, **characterised in that** the rotor part (14) has a radial armature flange (18) integral with the engine shaft (4) and disposed axially facing the stator part (15).

11. Retarder as claimed in claim 10 in conjunction with claim 2, **characterised in that** the radial flange (18') comprises an external radial annular component constituting the armature and axially facing the generally annular shaped inductor (16'-27') of the stator part (15), and an internal radial annular component incorporating said radial face (12) of the rotor part (14) against which the friction material (9) of the clutch moves into contact in the engaged position.

12. Retarder as claimed in claim 1, **characterised in that** the inductor of the stator part (15) is an inductor with poles (27), each surrounded by an inductor winding (16) and projecting out from said fixed annular component (25) of the stator part (15) towards the armature of the rotor part (14).

13. Retarder as claimed in claim 1, **characterised in that** the inductor of the stator part (15') is an inductor with claws (63, 64) and with a single inductor winding (65).

14. Retarder as claimed in claim 2, **characterised in that** the disc (8) of the clutch (7) is mechanically controlled and in the engaged position cooperates with a diaphragm (42), a pressure plate (51) and a cover (52) which are integral with the engine shaft (4) in rotation, the diaphragm (42) being actuated by means of a coupling control element of the actuator (44) and/or fork (43) type so that the radial face (11) of the clutch disc (8) is applied against the radial face (12) of the rotor part (14) and/or the flywheel (13).

15. Retarder as claimed in claim 8, **characterised in that** the clutch (7) is disposed externally to the retarder.

16. Retarder as claimed in claim 9, **characterised in that** the unit comprising at least the clutch disc (8) and diaphragm (42) is disposed radially inside the stator part (14).

17. Retarder as claimed in claim 2, **characterised in that** the disc (8) of the clutch (7) is electromagnetically controlled.

18. Retarder as claimed in claim 2, **characterised in that** the connecting means comprise a frame (31) which comprises at least one substantially radial flange centred on the axis (X) of the engine (4) and main (6) shafts, said flange (32) being attached to the front wall (5a) of the crankcase (5) of the gearbox (2), and having arms (36) which extend from the flange (32) towards the engine (1) in order to secure the frame (31) to the rear wall (3a) of the crankcase (3) of the engine (1), the retarder being housed with the clutch (7) in a space bounded by the flange (32), the fixing arms (36), the front wall (5a) of the crankcase (5) of the gearbox (2) and the rear wall (3a) of the crankcase (3) of the engine (1).

## Patentansprüche

1. Elektrischer Verlangsamer, der dazu bestimmt ist, zwischen eine Motorwelle (4), die zur Rotation um ihre Achse (X) angetrieben wird und die die Ausgangswelle oder Kurbelwelle eines Motors (1) ist, insbesondere von einem Fahrzeug, und eine Abtriebswelle (6) zwischengefügt zu werden, die dazu bestimmt, um die Achse angetrieben zu werden, und die eine Eingangswelle eines Getriebes (2) ist, wobei der Motor (1) und das Getriebe (2) jeweils ein Gehäuse aufweisen, wobei das Gehäuse (3) des Motors (1) eine hintere Wand (3a) aufweist, die sich im Wesentlichen senkrecht zur Achse (X) der Motorwelle (4) und der Abtriebswelle (6) erstreckt, und wobei das Gehäuse (5) des Getriebes (2) eine vordere Wand (5a) aufweist, die in Richtung der hinteren Wand (3a) des Gehäuses (3) des Motors (1) gerichtet ist, wobei der Verlangsamer über eine Verbindungseinrichtung (31) zwischen den zwei Gehäuse (3, 5) montiert ist und einen Rotorabschnitt (14), der mit der Motorwelle (4) zur Koaxialrotation fest verbunden ist, einen Statorabschnitt (15), der zumindest ein feststehendes ringförmiges Stück (25) aufweist, das durch eine der Wellen Motorwelle (4) und Abtriebswelle (6) oder eine Axialverlängerung (20) von zumindest einer der Wellen (4, 6) koaxial gequert wird und das mit zumindest einer der Wände hintere Wand (3a) des Gehäuses (3) des Motors (1) und vordere Wand (5a) des Gehäuses des Getriebes (2) fest verbunden ist, einen Anker (17), der zum Rotorabschnitt (14) gehört, und eine Induktorspule (16-27), die zum Statorabschnitt (15) gehört, aufweist, wobei die Induktorspule auf dem festehenden ringförmigen Stück (25) des Statorabschnitts (15), dem Anker (17) zugewandt angeordnet ist,
**dadurch gekennzeichnet, dass** die Induktorspule (16-27) des Verlangsamers mit zumindest einer elektromagnetischen Wicklung (16) in einer solchen Weise versehen ist, dass ein Wirbelstromverlangsamer gebildet wird.

2. Verlangsamer nach Anspruch 1, **dadurch gekennzeichnet, dass** eine Kupplung (7) mit zumindest einer Scheibe (8), die zumindest teilweise mit einem Reibmaterial (9) überzogen ist, zwischen den Motor (1) und das Getriebe (2) zwischengefügt ist und dazu bestimmt ist, die Motorwelle (4) und die Abtriebswelle (6) auswählend zu koppeln, wobei das Reibmaterial (9) eine Radialfläche (11) aufweist, die sich gegenüber einer Radialfläche (12) des Rotorabschnitt (14) oder einem Trägheitsrad (13), das mit der Motorwelle (4) zur Rotation fest verbunden ist, befindet und in der eingekuppelten Position dazu bestimmt ist, damit in Berührung zu gelangen.

3. Verlangsamer nach Anspruch 1, **dadurch gekennzeichnet, dass** der Rotorabschnitt (14) zur Rotation mit einem Trägheitsrad (13) fest verbunden ist, das auf der Motorwelle (4) oder einer Axialverlängerung (20) der Welle (4) von der Seite der Abtriebswelle (6) und überhängend nach außen von der hinteren Wand (3) des Gehäuses (3) des Motors (1) montiert ist.

4. Verlangsamer nach Anspruch 3, **dadurch gekennzeichnet, dass** der Rotorabschnitt (14) an dem Trägheitsrad (13) durch eine Verbindungseinrichtung (23) befestigt ist.

5. Verlangsamer nach Anspruch 3, **dadurch gekennzeichnet, dass** der Rotorabschnitt (14) und das Trägheitsrad (13) einstückig ausgebildet sind.

6. Verlangsamer nach Anspruch 2, **dadurch gekennzeichnet, dass** der Rotorabschnitt (14) rotationssymmetrisch um die Achse (X) der Motorwelle (4) ein Außenstück (17) im Wesentlichen in Zylinderform aufweist, das den Statorabschnitt (15) in einer solchen Weise umgibt, dass dieses einer Umfangsfläche des Statorteils (14) gegenüber eine Umfangsfläche aufweist, und das den Anker des Verlangsamers bildet, sowie eine Wange (18), die im Wesentlichen radial befestigt oder integriert in Bezug auf ein Trägheitsrad (13) ist, das mit der Motorwelle (4) fest verbunden ist.

7. Verlangsamer nach Anspruch 6, **dadurch gekennzeichnet, dass** das Außenstück (17) am Äußeren mit Rippen (19) zum Kühlen des Rotors (14) versehen ist.

8. Verlangsamer nach Anspruch 6, **dadurch gekennzeichnet, dass** der Statorabschnitt (15) zwischen das Trägheitsrad (13) und die hintere Wand (3a) des Gehäuses (3) des Motors (1) zwischengefügt ist, an der der Statorabschnitt (15) befestigt ist.

9. Verlangsamer nach Anspruch 6, **dadurch gekennzeichnet, dass** der Statorabschnitt (15) zwischen das Trägheitsrad (13) und die vordere Wand (5a) des Gehäuses (5) des Getriebes (2) zwischengefügt ist, an der der Statorabschnitt (15) befestigt ist.

10. Verlangsamer nach Anspruch 2, **dadurch gekennzeichnet, dass** der Rotorabschnitt (14) einer radialer Ankerwange (18) aufweist, die mit der Motorwelle (4) fest verbunden ist und die axial dem Rotorabschnitt (15) gegenüber angeordnet ist.

11. Verlangsamer nach Anspruch 10, wenn dieser von Anspruch 2 abhängt, **dadurch gekennzeichnet, dass** die Radialwange (18') einen radialen äußeren ringförmigen Abschnitt, der den Anker bildet und der axial gegenüber der Induktorspule (16'-27') in einer im Wesentlichen Ringform von dem Statorabschnitt (15) ausgebildet ist, und einen radial inneren ringförmigen Abschnitt aufweist, der die radiale Fläche (12) des Rotorabschnitts (14) bildet, mit der das Reibmaterial (9) der Kupplung in der eingekuppelten Position in Kontakt gelangt.

12. Verlangsamer nach Anspruch 1, **dadurch gekennzeichnet, dass** die Induktorspule des Statorabschnitts (15) eine Induktorspule mit Polen (27) ist, die jeweils von einer Erregerwicklung (16) umgeben sind und die auf dem feststehenden ringförmigen Stück (25) des Statorabschnitts (15) zum Anker des Rotorabschnitts (14) vorstehen.

13. Verlangsamer nach Anspruch 1, **dadurch gekennzeichnet, dass** die Induktorspule des Statorabschnitts (15') ein Klaueninduktor (63, 64) ist, der eine einzige Induktorwicklung (65) hat.

14. Verlangsamer nach Anspruch 2, **dadurch gekennzeichnet, dass** die Scheibe (8) der Kupplung (7) mechanisch gesteuert ist und in der eingekuppelten Position mit einer Membran (42), einer Druckplatte (51) und einer Abdeckung (52) zusammenwirkt, die bezüglich der Rotation mit der Motorwelle (4) fest verbunden sind, wobei die Membran (41) durch eine Koppelsteuereinrichtung vom Typ Betätigungseinrichtung (44) und/oder Gabel (43) in einer Weise betätigt wird, dass die Radialfläche (11) der Kupplungsscheibe (8) gegen die Radialfläche (12) des Rotorabschnitts (14) und/oder das Trägheitsrad (13) gedrückt wird.

15. Verlangsamer nach Anspruch 8, **dadurch gekennzeichnet, dass** die Kupplung (7) außerhalb des Verlangsamers angeordnet ist.

16. Verlangsamer nach Anspruch 9, **dadurch gekennzeichnet, dass** die Baugruppe, die zumindest durch die Kupplungsscheibe (8) und die Membran (42) gebildet ist, radial innerhalb des Statorabschnitts (15) angeordnet ist.

17. Verlangsamer nach Anspruch 2, **dadurch gekennzeichnet, dass** die Scheibe (8) der Kupplung (7) elektromagnetisch gesteuert ist.

18. Verlangsamer nach Anspruch 2, **dadurch gekennzeichnet, dass** die Verbindungseinrichtung eine Konstruktion (31) aufweist, die zumindest eine Wange (32) hat, die auf der Achse (X) der Motorwelle (4) und der Abtriebswelle (6) im Wesentlichen radial zentriert ist, wobei die Wange (32) an der vorderen Wand (5a) des Gehäuses (5) des Getriebes (2) befestigt ist und Arme (36) aufweist, die sich von der Wange (32) in Richtung des Motors (1) für die Befestigung der Konstruktion (31) an der hinteren Wand (3a) des Gehäuses (3) des Motors (1) erstrecken, wobei der Verlangsamer mit der Kupplung (7) in einem Raum untergebracht ist, der durch die Wange (32), den Befestigungsarm (36), die vordere Wand (5a) des Gehäuses des Getriebes (2) und die hintere Wand (3a) des Gehäuses (3) des Motors (1) begrenzt ist.
